# EUROPEAN PATENT SPECIFICATION

(11) **EP 0 933 738 B1**
(45) Date of publication and mention of the grant of the patent: **27.02.2002**
(21) Application number: 99201244.3
(22) Date of filing: 21.09.1995
(51) Int. Cl.: G08B 5/22

(54) **Paging**
Selektivruf
Appel sélectif

(30) Priority: 27.09.1994 US 313545
(43) Date of publication of application: 04.08.1999
(62) Divisional of application: 95306664.4
(73) Proprietor: SONY CORPORATION, Tokyo 141 (JP); SONY ELECTRONICS INC., Park Ridge, New Jersey 07656 (US); GENERAL MAGIC, INC., Sunnyvale, California 94086 (US)
(72) Inventor: Gruzen, Alexander, Redwood City, California 94062 (US); Onosaka, Kazunobu, Kanagawa-ken 253-0024 (JP); Mugura, Kazuto, Cupertino, California 95014 (US); Fujii, Toshiya, 105 Menlo park CA 94025 (US); Libes, Michael, Seattle, Washington 98119 (US); Adams, Williams, Seattle, Washington 98119 (US); Lynch, Kevin, San Francisco, California 94109 (US); Tsuk, Robert, Cupertino, California 95014 (US)
(74) Representative: DeVile, Jonathan Mark, Dr.

(56) References cited:
- EP-A- 0 434 231
- WO-A-94/03985
- US-A- 5 387 904

## Description

This invention relates to paging, and more specifically to paging mechanisms, devices, interfaces and processes. More particularly, but not exclusively, the invention relates to the use of radio frequency paging devices in computer systems, for instance portable computer systems.

Paging devices are widely accepted and used as a form of communication. The earliest pagers were simple receiving devices which would generate an audible tone when the user was paged. The user would then call a predetermined number to find out the message associated with the page. Typical paging devices today provide for alphanumeric paging which provides on a small display a telephone number or a short alphanumeric message. As computers have become smaller in size and therefore more portable, functions such as paging have been added to these computer devices.

US-A-5,387,904 published after the priority date of the present application, but claiming priority from prepublished JP-A-5 244 057 discloses a paging system comprising a computer system having a processor, a memory, a display, an input device and a card interface coupled via a bus. The system includes a paging card comprising a receiver, a memory unit and an interface for connecting to the computer system.

The memory unit of the paging card is arranged to include a program for the operation by the processor in the computer system.

Various different aspects of the invention are set out in the respective independent claims hereof.

Preferred embodiments of the invention described hereinbelow provide: an innovative user interface for pager functionality on a small digital computing device;
automatic look-up of a telephone number provided in a paging message to identify the sender of the page and a button to enable to user to immediately call back the sender of the page;
an automated electronic mail receiving system which automatically dials up an electronic mail system and down-loads messages upon receipt of the page indicating that messages are waiting in the electronic mail system; and
a memory efficient paging system in which a portion of the paging system is operable without connecting the paging device to the computer system.

In one embodiment, a small portable computing device, such as a personal digital assistant (PDA/PIC) or a personal communications device is provided with an innovative paging capability to assist the user of the PDA in receiving and responding to pages. One feature is the automated look-up of a telephone number received as a paged message to provide the user of the PDA with the name of the sender of the page, the telephone number of the sender and a telephone icon which, when selected by the user, will cause the PDA to dial the telephone number identified by the paging message.

In another embodiment, the PDA receives messages in a predetermined format which identifies the name of the caller as well as the alphanumeric message. The system responds by displaying the name and telephone number of the caller, the message, and an icon to enable the user to call the sender of the paging message.

The paging mechanism may also be used to notify the user of electronic mail which has arrived into the user's mailbox located on an electronic mail system. In this event, when a message is received, the electronic mail system generates a page notifying the user that there is a mail message waiting to be read. If the computing device is in a power on state, an icon appears, enabling the user to download the message from the electronic mail system by selecting the icon. The paging system responds to selection of the icon by dialling up the electronic mail system, accessing the electronic mail message, and downloading the message from the E-mail system to the computing device.

In addition, it is preferred that when the device is in a power down state and a page is received, indicating that a message awaits the user, the paging device causes the computing device to go into a power on state and dial up the electronic mail system to automatically retrieve and download the message into the computing device memory for access by the user when the user subsequently turns the computing device on.

Furthermore, an innovative memory allocation technique may be provided. A portion of the paging software that provides the paging functionality in the computing device is downloaded to the memory of the computing device when the paging device is first connected to the computing device. The software downloaded includes the paging code to send out pages through the telephone transmitting and receiving device located in the computing device and software to read the display stored messages. Thus the user can remove the paging device from the computing device and still display messages and send out paging messages. The software may be generated to provide common links when needed. For example, the paging display software accesses the information stored in memory by the paging receiving software.

The invention will now be further described, by way of illustrative and nonlimiting example, with reference to the accompanying drawings, in which:
Figure 1 is an external representation of a device embodying the invention used to provide innovative paging functions;
Figure 2 is a system block diagram which may be used in the device of Figure 1 to provide the innovative paging functions;
Figure 3 is an exemplary flow diagram of a process for downloading a portion of software for performing a paging function;
Figure 4 is a flow diagram describing the display of paging messages and, in particular, the look-up and display of telephone numbers and callers corresponding to those telephone numbers and an icon which enables the user to immediately dial up the sender of the page;
Figure 5, Figure 6, Figure 7, Figure 8, Figure 9, Figure 10, and Figure 11 illustrate exemplary generated displays;
Figure 12 and Figure 13 illustrate exemplary displays generated when a paging message is received regarding E-mail messages;
Figure 14a and 14b are tables which describes messages and display of phone numbers in response to pages received; and
Figure 15 is a flow chart illustrating exemplary steps for receiving electronic mail messages.

A portable computing device, which provides innovative paging functionality, is described. In the following description for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present description.

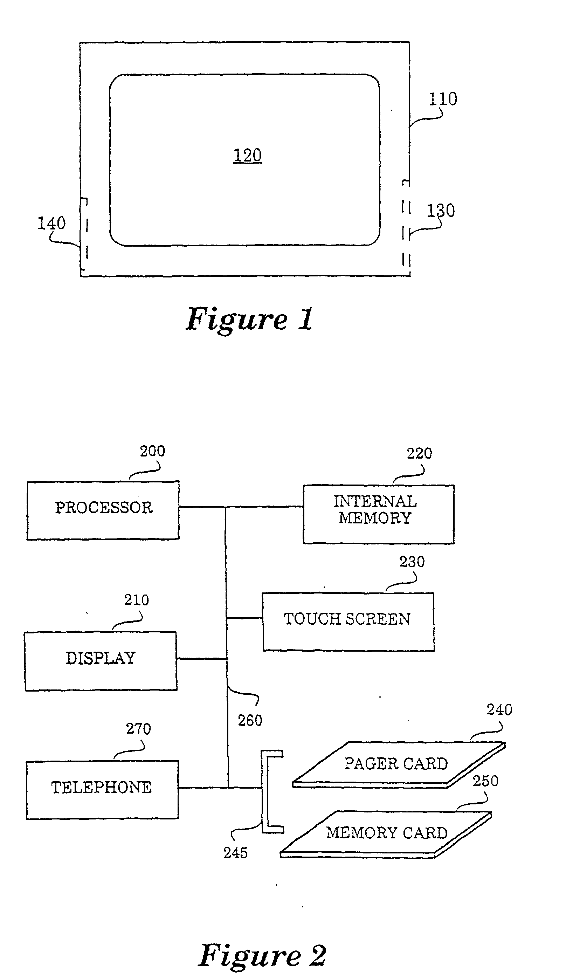

**Figure 1** is an illustrative drawing of a small computing device which includes innovative paging functions in accordance with embodiments of the invention. The device, 110, includes a display, 120, with a touch-sensitive screen, enabling the user to provide input to the device through the touch-sensitive screen. Also included are a plurality of input/output connectors 140, including a telephone jack to connect the telephone receiver and transmitting device located internal to the computing device 110 to a telephone network. This enables the device 110 to dial up and receive telephone calls. Also included is a slot 130 for receiving a memory card, such as a PCMCIA (Personal Computer Memory Card International Association) card. In the present invention, it is preferred that the paging device described herein is incorporated on a card that fits into the slot 130 and interfaces with the device 110 to provide the paging functionality described herein.

An exemplary block diagram of the system is shown in **Figure 2.** Processor 200, is coupled to internal memory 220, display 210, touch screen 230, and the PCMCIA slot, 245, which can receive and connect PCMCIA compatible cards such as an external memory card 250 or the pager card 240 described herein. These devices are coupled via a bus 260. Also coupled to the bus is a telephone receiving and transmitting device 270, which enables the device to communicate through the telephone network.

The pager card includes a receiver to receive paging transmissions and at least one light indicator to indicate status of the paging device, such as unread messages. The card includes local nonvolatile memory for storage of the software to control the paging card. In one embodiment of the present invention, a portion of the software is downloaded to the computing device internal memory for access by the processor when performing pager functions. The remaining portion continues to be stored in the nonvolatile memory of the pager card and is provided to the processor when needed to execute certain paging functions. Preferably the software is downloaded into non-volatile memory such that the software is maintained in memory when the processing device is in a non-volatile state.

The ability to download a portion of the pager card software provides for a number of distinct advantages. First, by downloading a portion of the software to the computing device local memory, that functionality embodied in the software is accessible without the pager card. This is important in small devices which only have one PCMCIA slot and need the memory slot for insertion of an expansion memory card. In the present embodiment, software to enable the user to send a page through the telephone network and software to display and read current paging messages previously received by the pager card are permanently downloaded to the computing device memory. The software to display paging messages includes bit mapped images of certain graphic objects used in the display. Substantial memory space is saved as the display is generated by reference to the graphic objects.

The software is developed to communicate with common objects and data as needed to provide the functionality desired. For example the page receiving software receives the page and generates the list of objects to be displayed. This is communicated, for example through a common database or via a message, to the pager display software which generates the display of the page message.

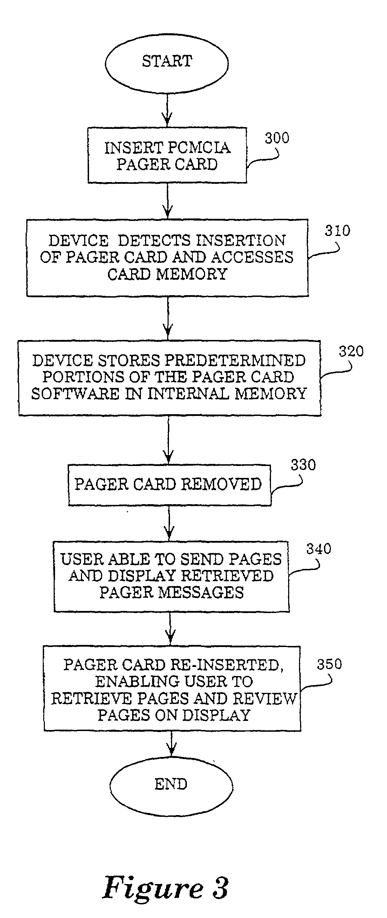

**Figure 3** is an exemplary flow diagram of this process for downloading a portion of the software and accessing the software to provide the paging functions described herein. The flow diagram sets forth the functionality of the process. It is readily apparent to one skilled in the art that a variety of implementations may be generated using known programming techniques to perform the functionality described. Therefore, the details of such implementations will not be discussed herein. Referring to Figure 3, when the pager card is first inserted into the device, step 300, the device detects insertion of the pager card, and if the pager software is not stored in the device memory, accesses the card memory 310 to retrieve the portion of the software to perform certain paging operations without the paging hardware.
Preferably, control bits are provided in the software to tell the processor which portions of the code to download permanently to the processing device memory. The software downloaded is stored in internal memory, step 320, of the computing device. Thus, when the pager card is subsequently removed, for example in order to insert an extended memory card, step 330, certain portions of the software remain resident in the internal memory of the computing device. Therefore, selected functions are operable without the pager card. In the present embodiment, step 340, software to send pages and software to display retrieved pages are resident in the computing device and executable without the pager card. When the pager card is subsequently reinserted, step 340, the software functionality that is only resident on the pager card is accessible. In the present embodiment, the software to retrieve pages is stored in the pager card is executed, step 350, enabling the user to retrieve pages to be displayed on the display.

The pager software, whether resident on the pager card or stored in the computing device memory, communicates information among the executing paging processes, such as paging data representative of the message received, in order to provide seemingly seamless paging operations. For example, when the pager card is inserted into the computing device and a page is received, a first process executes the pager receiving code located in the pager card and a second process executes the pager display code stored in the memory of the computing device. One way contemplated to communicate data between processes operative from the pager card and processes operative from the computing device is to provide a message transfer capability in which data is communicated using a message handling system. Another way contemplated is to provide a shared memory that all the processes access to read and write the shared data. Other data sharing/communication techniques may also be used.

An additional feature is the ability to remove the pager card and limit the insertion of the card into the computing device to only when the user receives a page. Preferably, the pager card has LEDs indicating unread pages. In addition, a pager card may provide some audible mechanism to indicate unread pages. Thus, the user can remove the paging card from the device and insert another card, such as the extended memory card, to perform other operations, and when a page is subsequently received, as indicated by the visible or audible indicators on the pager card, the user can receive the page immediately by removing the memory card currently in the device and inserting the pager card to access the paging messages through the user interface of the computing device. The memory card can be subsequently reinserted once the user has read the page.

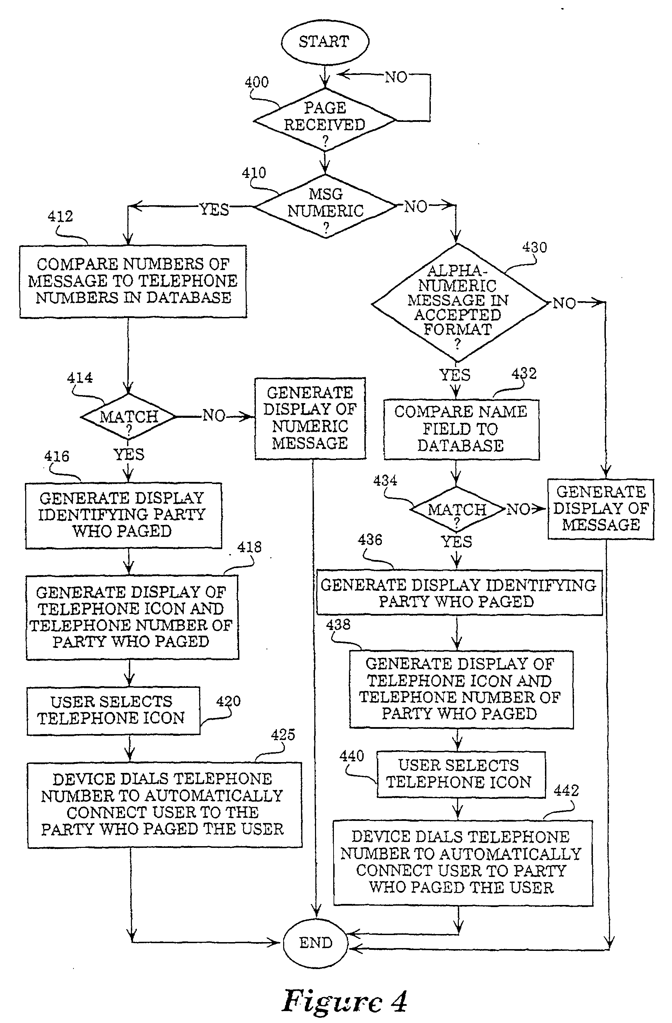

An innovative user interface for receiving messages and returning telephone calls is now described. Referring to Figure 4, one aspect of receiving pages is described. At step 400, when a page is received, the software will first determine whether the message is a numeric message or an alphanumeric message, step 410. If the message is numeric, step 412, the numbers of the message are compared to a database of names and telephone numbers to determine if the telephone number matches one contained in the user's database. This database may be a database maintained by the user, such as a telephone book, or the like.

If a match is found, step 414, a display is generated identifying the person who issued the page, as determined from the database, step 416. The display further provides the telephone number of the person who issued the page and a telephone icon in the proximity of the telephone number. This icon functions as a button that is selectable by the user, step 418. If the user selects the telephone icon, step 420, the device will automatically dial, step 425, the telephone number shown next to the button to connect the user immediately to the party who issued the page. Thus the process typically exercised when receiving a page, that is to immediately call back the party who sent the page, is easily performed through the user interface of the device without the need to proceed through additional menus or displays to select a telephone dial feature.

If, at step at 414, a match is not found, then the numeric message will be displayed and the user has the capability through other menus or functions on the computing device to dial the message to connect to the caller who placed the page. It is readily apparent that the interface may also provide a telephone icon with the number even though the number has not been found in the database, thereby enabling to user to automatically call the number set forth in the page. For example if the number of digits corresponds to that of a valid telephone number, the telephone button is displayed adjacent to the number, enabling the user to dial the number by selecting the button.

Referring back to step 410, if the message is alphanumeric, at step 430, it is determined whether the message is in an accepted format. One such format utilized in the paging services is "sendername I subject I content". It is readily apparent to one skilled in the art that other prespecified formats may be used in accordance with the teachings of the present invention. Thus, at step 430, if the message is in an accepted format, the sendername field is compared to the name fields in the database, step 432. If a match is found, step 434, a display is generated, identifying the person who issued the page, step 436, and further providing a telephone icon and a telephone number of the person who sent the page, step 438. Therefore, if the user chooses to contact the sender of the page, step 440, the user selects the telephone icon and, at step 442, the device dials the telephone number to automatically connect the user to the person who sent the page to the user. If, at step 434, no match is found, a display is generated of the user identifying the sender, the message content and the subject of the message.

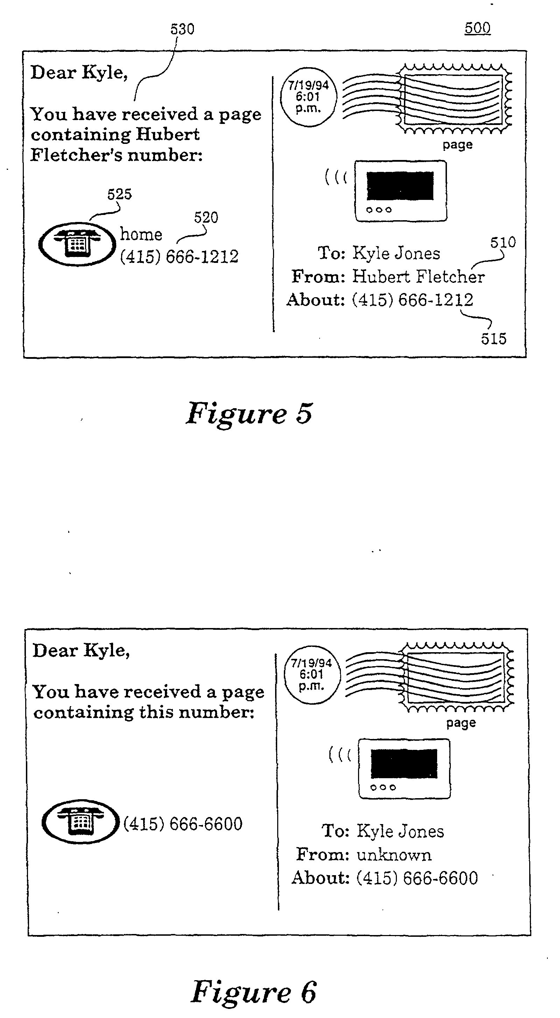

**Figure 5** illustrates an exemplary display 500 generated in response to receiving a numeric page consisting of a phone number which is found in the user's database. Thus, in this example, the sender of the page 510 and the telephone number 515 is identified to the user of the device. A message, 530, in the form of a note to the user, is further provided on the display to inform the user of the context of the page. In addition, the telephone number of the sender 520 is provided adjacent to a telephone icon 525. Thus, if the user wishes to call the sender of the page, he simply selects the telephone icon 525 and the device will automatically dial the telephone number. It is apparent to one skilled in the art that the icon shown in the drawings is exemplary and a variety of icons can be used to visually communicate the automatic dialing feature shown herein.

**Figure 6** illustrates an exemplary display when the telephone number is not found in the user's database. In this case, the sender of the page is not identified and the telephone number is provided adjacent to the telephone icon, enabling the user to contact the party who issued the page by selecting the telephone icon.

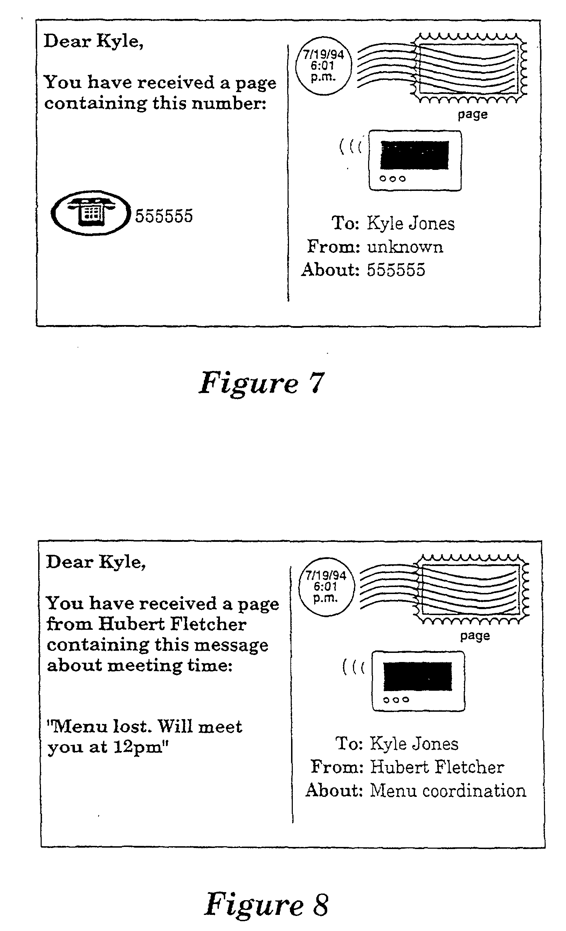

In the present embodiment, as shown in **Figure 7**, the telephone icon is provided if the numeric string received in the pager message is not verified to be a phone number. However, it is apparent that the system can be modified such that when a number is not in a format compatible with a telephone number, that the icon is not displayed and the user is not enabled to select the automatic telephone dialing feature.

**Figure 8** shows a message that was sent in the format sendername I subject I content. The database is first searched for the sendername. If a matching name is found, it is shown in the from field in its complete form as shown in the database. If it is not found in the database, the text as found in the sendername field is displayed unmodified. Thus, a partial name may be provided in the sendername field of the message and the person's complete name, as specified in the database, will show up on the display to the user. In addition, although not shown in Figure 8, the telephone with a default telephone number for the party, may be displayed along with the message provided in the page, enabling the user to dial the sender of the page. The default number may be, for example, the party's work telephone number. It is contemplated that the default number is established for each person in the database during the generation of the database.

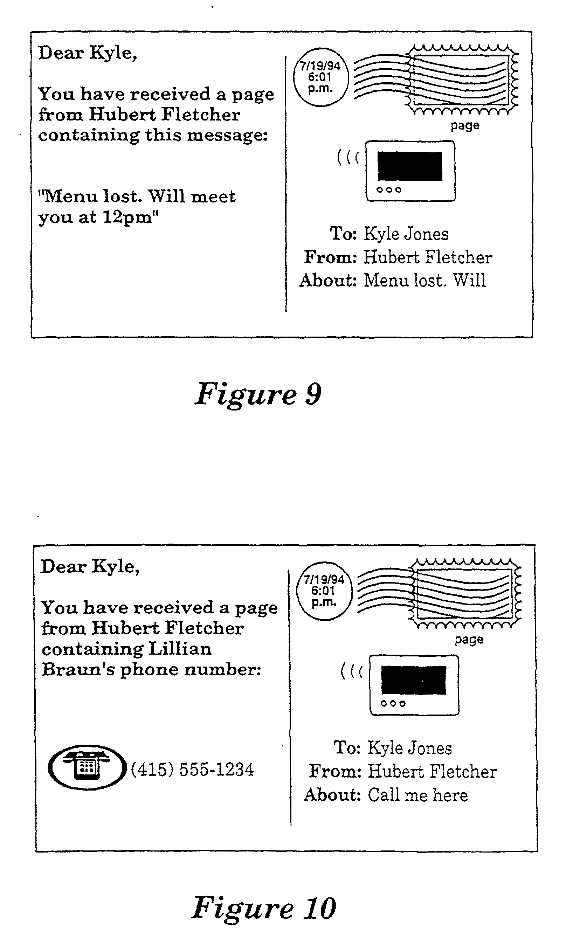

**Figure 9** illustrates a display in which no subject is provided in the subject field but the sendername and the message content is provided. Again, the database is searched for compatible sendername and displays that name in the from field of that display.

**Figure 10** shows an alphanumeric message in which the content of the message is a number, such as a telephone number. Thus, the number found in the message is used to compare to telephone numbers in the database to retrieve the name of the caller and the full telephone number. The telephone icon is displayed in proximity to the telephone number, indicating that the user can select the automatic dialing feature, thereby enabling the user to call the sender of the page at the identified telephone number.

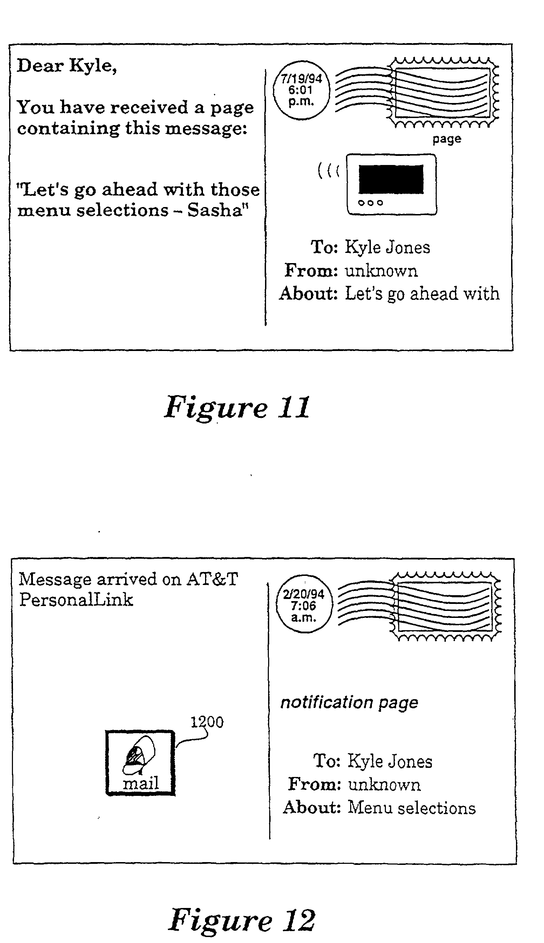

**Figure 11** shows one possible display when the alphanumeric page is not formatted. The system responds simply by displaying the alphanumeric message sent.

The structure of the database may be any data structure known to those skilled in the art which would be compatible with the device and the information to be contained in the database. For example, the database may be structured similar to a telephone directory in which the user's name, address, and telephone number is listed. More sophisticated systems would include additional fields for fax numbers and multiple telephone numbers and paging numbers. The paging functionality described herein uses the name and the telephone numbers provided for each name to do searches to identify the senders of paging messages.

The system also provides a paging mechanism when electronic mail (E-mail) arrives for the user. One such E-mail service which may be used is AT&T Personal Link^{SM}, provided by AT&T. Thus, when an E-mail message arrives, the AT&T Personal Link^{SM} system will issue a page to the user. The page indicates that there is an E-mail message waiting for the user. Preferably, an icon will be provided that when selected, the device will automatically dial up the E-mail service and access the E-mail message that is waiting for the user. **Figure 12** illustrates an exemplary selectable mail icon 1200, which enables the user to access the E-mail message.

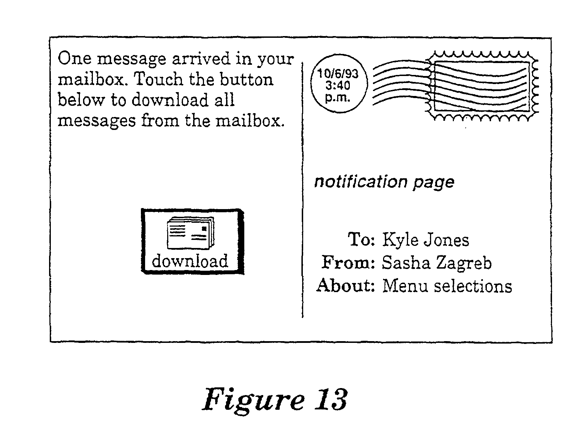

Another embodiment is shown in **Figure 13** in which a feature button referred to as "download" is utilized to download a message from the E-mail facility. As with the receipt of the page in the predetermined format, the sendername will be compared against the database to determine the sender's full name. If a match is found, then the full name of the sender will be identified from the database. Otherwise, the name as found in the sendername field is displayed unmodified.

In one embodiment, the provider of the E-mail services is included in the user's database such that when a page comes in, the sendername will match an entry in the database for an E-mail provider. In this manner, multiple E-mail providers can be accessed automatically. If the sendername is determined to be the name of an E-mail provider, the display generated will include a message that an E-mail has arrived, the sender of the E-mail and the subject of the E-mail. This information is extracted from the prespecified string, e.g., sendername I subject I content sent as the paging message. The display will also include an electronic mail icon which functions as a button to be selected by the user. When the user selects the button, the computing device dials up the e-mail provider and retrieves the message. In another embodiment, the processor examines the incoming message string before searching the database, to determine if the message contains a code indicative that the message is from an E-mail provider. If the message is from an E-mail provider, the display of the sender and subject of the E-mail and the download button is provided.

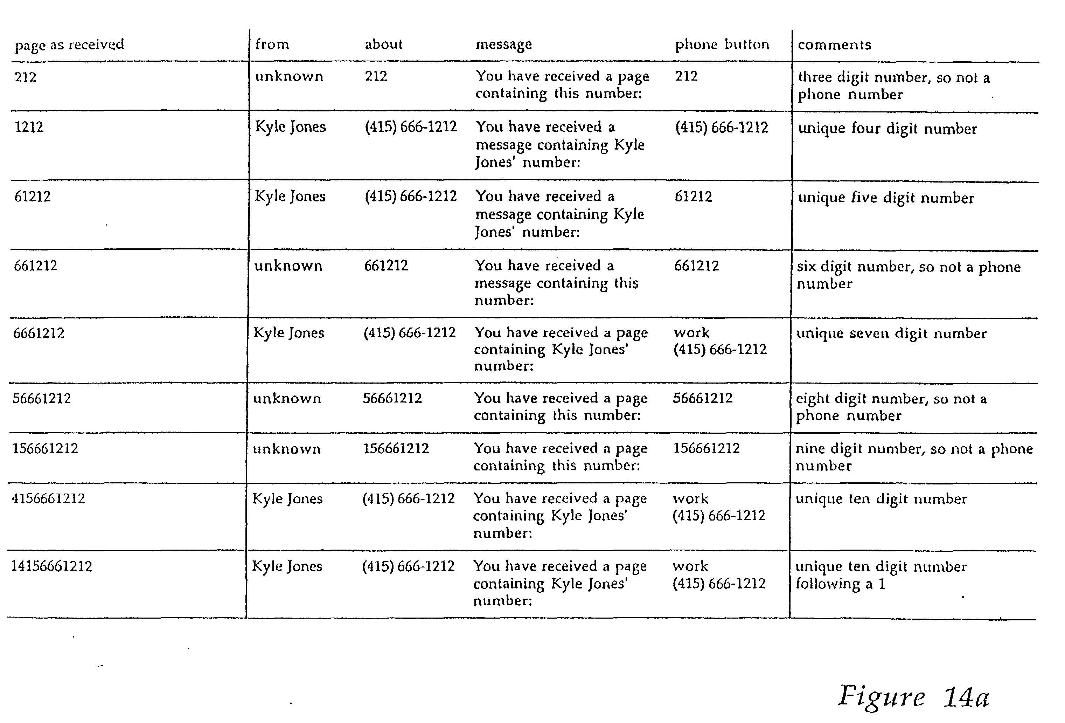

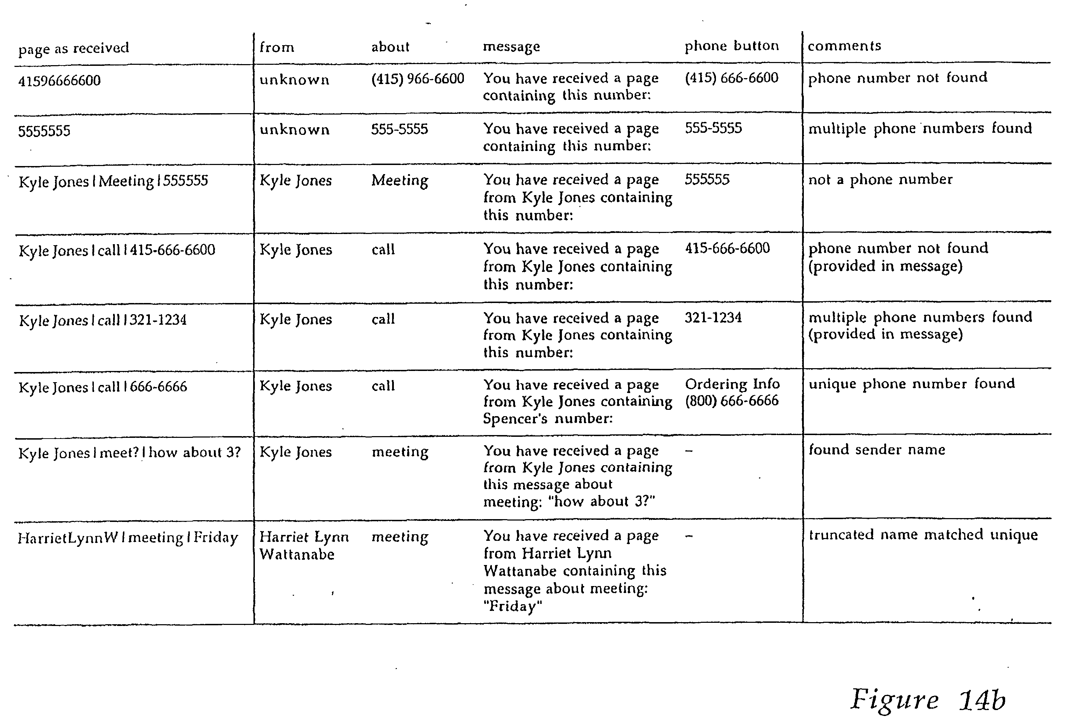

**Figures 14a and 14b** are tables which describe various displays that are generated in response to paging messages that are received. The left column identifies the page as received; the 'from' column identifies the sender of the page; the 'about' column identifies the subject of the page; and the 'message' is that formed from the string received. If a match is found in the database or the telephone numbers provided as part of the message, a telephone number is displayed with the telephone icon in order to enable the user to dial the sender of the page. In one embodiment the pager provides additional functionality by retrieving a user's E-mail messages when the device is in a power down or sleep state.

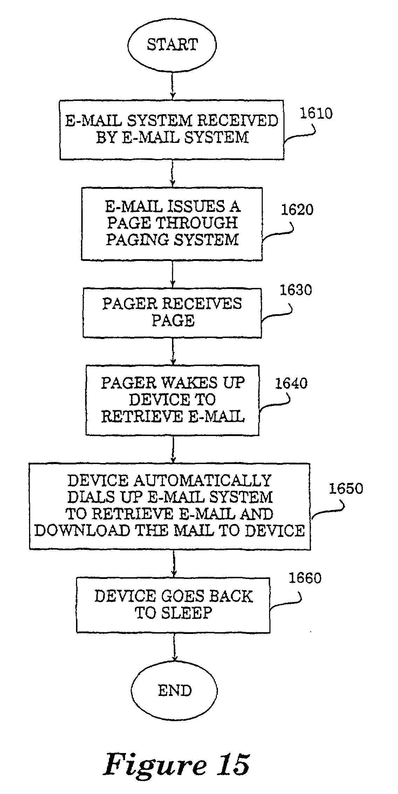

This processes is generally described in reference to **Figure 15**. Referring to **Figure 15**, at step 1610, when an E-mail is received by an E-mail system, at step 1620, the E-mail system issues the page through the paging system. At step 1630, the pager receives the page indicating that E-mail is waiting for the user. The pager determines that the message is from an E-mail provider.
This is preferably determined from the format of the message, for example, the sendername field. At step 1640, the pager wakes up the computing device to retrieve the E-mail. Preferably this is accomplished by the pager card issuing a wakeable interrupt signal to the computing device. The computing device is then powered up and, at step 1650, the device determines the telephone number of the E-mail provider from the page message, automatically dials the E-mail system to retrieve the E-mail and downloads the E-mail message.onto the computing device such that the E-mail message is available to the user when the user subsequently accesses the computing device. At step 1660, once the download of the E-mail message is complete, the device then returns back to the sleep mode to conserve power.

The invention has been described in conjunction with the preferred embodiment. It is evident that numerous alternatives, modifications, variations and uses will be apparent to those skilled in the art in light of the foregoing description.

## Claims

1. A paging system comprising:
a computing device comprising,
a a processor (200), a memory (220), a display (120), an input device (230) and a card interface (245) coupled via a bus (260);
a removable paging card (240) comprising;
a receiver to receive pager messages,
a non-volatile memory for storing code, which when executed by the processor, performs predetermined paging functions, and
a bus interface for connecting to the card interface and communicating control signals and code to the processor via the bus;
**characterised in that**
upon first connection of the paging card to the computing device, said processor (200) is operable to read predetermined portions of the code in the non-volatile memory of the paging card (240) and to store said code in the memory (220) of the computing device said code comprising a first set of functions that are operable without the paging card (240);
said processor (200) executing the first set of functions from the computing device memory (220) when the removable paging card is removed from the paging system, and said processor executing a second set of functions from the paging card memory when the paging card is connected to the paging system.

2. The paging system as set forth in claim **1,** wherein said first set of functions comprises functions to send pager messages and display on the display received pager messages.

3. The paging system as set forth in claim **1,** wherein the second set of functions comprises functions to receive pager messages.

4. The paging system as set forth in claim **1,** further comprising a communication mechanism for communicating data between processes executing the first set of functions and processes executing the second set of functions.

## Patentansprüche

1. Paging-System
mit einer Rechenvorrichtung, die aufweist:
einen Prozessor (200), einen Speicher (229), ein Display (120), eine Eingabevorrichtung (230) und ein Karten-Interface (245), die über einen Bus (260) miteinander verbunden sind,
und mit einer entfernbaren Paging-Karte (240), die aufweist:
einen Empfänger für den Empfang von Pager-Nachrichten,
einen nichtflüchtigen Speicher zum Speichern eines Codes, der vorbestimmte Paging-Funktionen durchführt, wenn er von dem Prozessor ausgeführt wird, und
ein Bus-Interface für die Verbindung mit dem Karten-Interface und zum Übertragen von Steuersignalen und des genannten Codes über den Bus zu dem Prozessor,
**dadurch gekennzeichnet,**
**daß** der Prozessor (200) so betreibbar ist, daß er bei der erstmaligen Verbindung der Paging-Karte mit der Rechenvorrichtung vorbestimmte Teile des Codes in dem nichtflüchtigen Speicher der Paging-Karte (240) ausliest und den genannten Code in dem Speicher (220) der Rechenvorrichtung speichert, wobei der Code einen ersten Satz von Funktionen enthält, die ohne die Paging-Karte (240) ausführbar sind,
**daß** der Prozessor (200) den ersten Satz von Funktionen aus dem Speicher (220) der Rechenvorrichtung ausführt, wenn die entfernbare Paging-Karte aus dem Paging-System entfernt wird,
und **daß** der Prozessor einen zweiten Satz von Funktionen aus dem Speicher der Paging-Karte ausführt, wenn die Paging-Karte mit dem Paging-System verbunden wird.

2. Paging-System nach Anspruch 1, bei dem der erste Satz von Funktionen Funktionen zum Senden von Pager-Nachrichten und zum Anzeigen von empfangenen Pager-Nachrichten auf dem Display umfaßt.

3. Paging-System nach Anspruch 1, bei dem der zweite Satz von Funktionen Funktionen zum Empfangen von Pager-Nachrichten umfaßt.

4. Paging-System nach Anspruch 1, ferner mit einem Übertragungsmechanismus zum Übertragen von Daten zwischen Prozessen, die den ersten Satz von Funktionen ausführen, und von Prozessen, die den zweiten Satz von Funktionen ausführen.

## Revendications

1. Système d'appel de personne comprenant :
un dispositif informatique comprenant :
un processeur (200), une mémoire (220), un affichage (120), un dispositif d'entrée (230) et une interface de carte (245) couplés via un bus (260) ;
une carte d'appel de personne amovible (240) comprenant :
un récepteur pour recevoir des messages d'appel de personne,
une mémoire non volatile pour stocker un code, qui lorsqu'il a été exécuté par le processeur, réalise des fonctions d'appel de personne prédéterminées, et une interface de bus pour le raccordement à l'interface de carte et pour communiquer des signaux de commande et un code au processeur via le bus ;
**caractérisé en ce que**,
lors de la première connexion de la carte d'appel de personne au dispositif informatique, ledit processeur (200) est utilisable pour lire des parties prédéterminées du code dans la mémoire non volatile de la carte d'appel de personne (200) et pour stocker ledit code dans la mémoire (220) du dispositif informatique, ledit code comprenant un premier jeu de fonctions qui sont utilisables sans la carte d'appel de personne (240) ;
ledit processeur (200) exécutant le premier jeu de fonctions à partir de la mémoire de dispositif d'ordinateur (220) lorsque la carte d'appel de personne amovible est enlevée du système d'appel de personne, et ledit processeur exécutant un second jeu de fonctions de la mémoire de carte lorsque la carte est raccordée au système d'appel de personne.

2. Système d'appel de personne selon la revendication 1, dans lequel ledit premier jeu de fonctions comprend des fonctions pour envoyer des messages d'appel de personne et pour afficher sur l'affichage des messages d'appel de personne reçus.

3. Système d'appel de personne selon la revendication 1, dans lequel le second jeu de fonctions comprend des fonctions pour recevoir des messages d'appel de personne.

4. Système d'appel de personne selon la revendication 1, comprenant en outre un mécanisme de communication pour communiquer des données entre des traitements exécutant le premier jeu de fonctions et des traitements exécutant le second jeu de fonctions.
